# EUROPEAN PATENT APPLICATION

(11) **EP 2 096 509 A1**
(43) Date of publication of application: **02.09.2009**
(21) Application number: 08102000.0
(22) Date of filing: 26.02.2008
(51) Int. Cl.: G05B 19/042, B60R 16/03

(54) **Remote handler for off-chip microcontroller peripherals**

(71) Applicant: Fujitsu Microelectronics Europe GmbH, 63225 Langen (DE)
(72) Inventor: Bodenmüller, Marco, Langen (DE); Bräuer, Mathias, Egelsbach (DE); Distler, Christian, München (DE); Lösche, Holger, Langen (DE); Thormann, Volker, D-82362 Weilheim (DE); Wiewesiek, Wolfgang, Darmstadt (DE)
(74) Representative: Sunderland, James Harry

(57) **Abstract**

A system for controlling a peripheral function, comprises a control device (100) having a programmable processing unit (110) programmable to generate a control command to initiate and control a desired peripheral function remote to the control device (100) and a first handling unit (130) configured by hardware means to convert a control command from the programmable processing unit (110) into a set of control parameters, and a peripheral device (200) having a peripheral function unit (250) configured by hardware means to perform the desired peripheral function based on the set of control parameters and a second handling unit (230) connected to the first handling unit (130) via a communications link (140, 240) and configured by hardware means to receive and detect the set of control parameters from the first handling unit (230) and transmit the same to the peripheral function unit (250). The invention eliminates the necessity for a second CPU on the peripheral device (200) that controls remote peripheral functions. This reduces the overall system cost not only for the amount of hardware not required anymore but in even larger scale for savings in software design and maintenance.

## Description

### Field of the invention

The present invention relates to the control of remote peripheral devices, which are used e.g. for automotive vehicle-based applications.

### Technical background

Today a controlling microprocessor unit (MCU) typically has all necessary peripheral functions (PF) embedded to its device. Remote peripheral functions not embedded to the microcontroller are connected via parallel bus interfaces or I/O-ports of the MCU or are supported by an additional CPU/MCU which has these remote peripherals on chip. Remote in this context means that the peripheral functions are not located on the same device as the controlling processor or in close proximity of the MCU such as on the same printed circuit board as the MCU.

Such peripheral devices can be split into a peripheral function and an associated actuator or sensor. The control of remote peripherals is presently realized by two basic architectures:

### (1) Directly attached peripherals

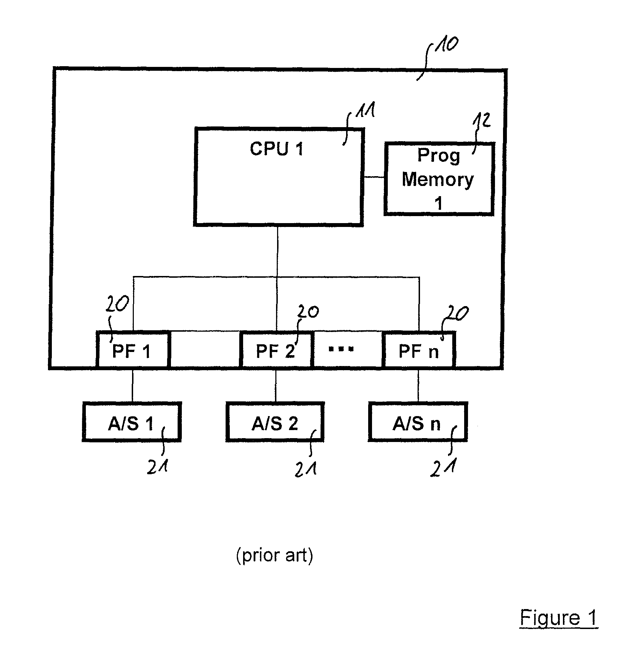

In this case an MCU has all necessary peripheral functions (PF) embedded to its device as shown in Fig. 1. This architecture affords that all external devices such as sensors and actuators (A/S) that are operated by these peripheral functions are located in very close proximity of the MCU.

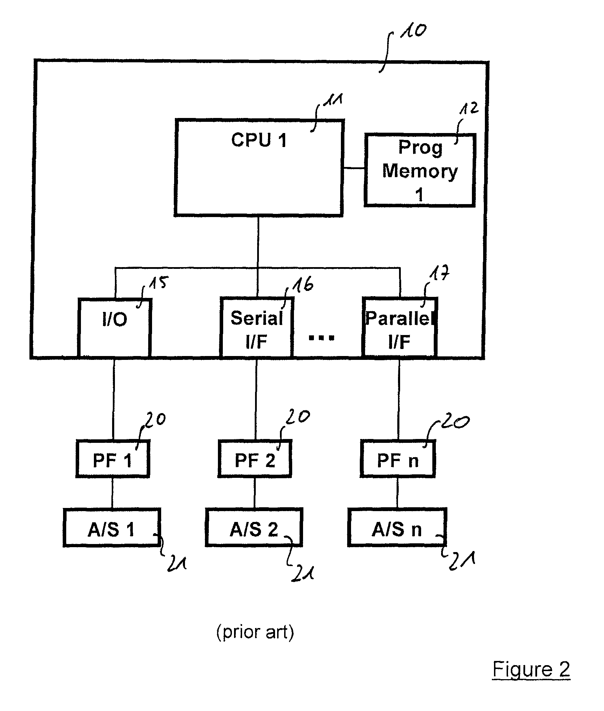

Some MCU offer the option of connecting peripheral functions from a foreign device in order to enhance the functionality of the MCU. These off-chip peripheral functions are directly connected via I/O-ports or a parallel, external bus interface or serial links to the MCU as shown in Fig. 2. For the majority of these communication links a limited maximum distance of its nodes has to be respected. The distance between MCU and the attached off-chip peripheral functions is typically limited to the dimensions of the printed circuit board on which both, the MCU and the peripherals, are mounted.

Both methods of directly attaching off-chip peripherals presume a system topology where either the peripheral function of the off-chip peripherals or the actuators or sensors have to be placed in close proximity of the MCU. This condition is only met in a minority of automotive applications. In the majority of applications the measurement of physical values such as temperature, voltage or current has to be performed in locations spread all over the vehicle.

### (2) Remotely linked peripherals

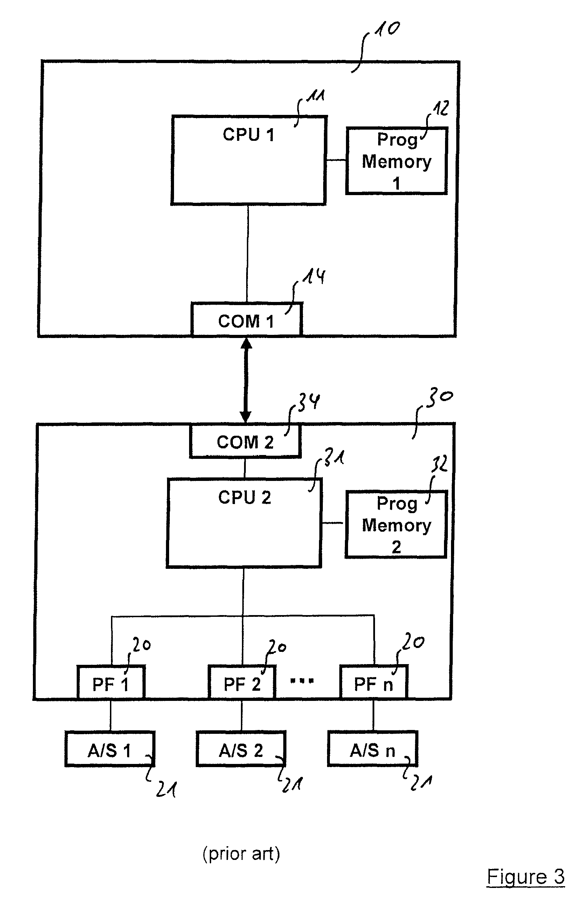

Another concept that enables large displacements between MCU and peripheral follows the architecture of distributed intelligence which consists of more than one MCU. All of these MCUs are connected to each other by a network. Fig. 3 shows a minimum system with two MCUs with a network represented by COM 1 and COM 2, where MCU 1 requests a peripheral function located at MCU 2.

When MCU 1 requests a peripheral function to be executed that is not locally available, it issues a request to the network. The remote MCU 2 with the suitable peripheral function receives the request and issues the function on its peripheral. After the function is issued, the MCU can respond to the requesting MCU sending an acknowledgement and/or sending the retrieved data from the peripheral.

This concept requires program code at all network participants for several tasks. In first place both, the requesting MCU 1 and the MCU 2 issuing the peripheral function, have to have software modules for operating the network. These are receive and transmit functions as well as network management functions that need to be implemented.

Moreover, the remote MCU has to be equipped with program code located in an additional memory (Prog Memory 2) that operates the peripheral functions and the attached peripheral devices And finally, all of the program on this remote MCU shall meet software maintenance criteria. In automotive applications any programmable unit has to provide means that enable remote programming of its MCU which again requires specific software modules in addition to those mentioned beforehand.

Currently there exists no concept to control remote peripherals without a localized, remote CPU/MCU which would eliminate the cost for the additional CPU, the cost for the additional program memory, and the cost for the software and its maintenance in a distributed system.

### Summary of the invention

The invention aims to improve methods of controlling remote peripherals. It particularly aims to provide a mechanism to overcome the limitation of embedded or closely localized peripheral functions.

These problems are solved according to the present invention by a system for controlling a peripheral function comprising a control device including a programmable processing unit programmable to generate a control command to initiate and control a desired peripheral function remote to the control device and a first handling unit configured by hardware means to convert a control command from the programmable processing unit into a set of control parameters, and a peripheral device including a peripheral function unit configured by hardware means to perform the desired peripheral function based on the set of control parameters and a second handling unit connected to the first handling unit via a communications link and configured by hardware means to receive and detect the set of control parameters from the first handling unit and transmit the same to the peripheral function unit.

A major advantage provided by the system according to the invention is the reduction of costs for remote processing since the peripheral device performs its functions based on the transmitted parameter set by means of hardware structures and thus does not execute programmable code. Corresponding programming and maintenance work and costs are therefore not necessary.

The present invention further provides a method of controlling, through a control device, a peripheral function in a peripheral device remote to the control device, the method comprising the steps of: in the control device, in a programmable processing unit, generating a control command to initiate and control a desired peripheral function and in a first handling unit configured by hardware means, converting the control command from the programmable processing unit into a set of control parameters, in the peripheral device, in a second handling unit connected to the first handling unit via a communications link and configured by hardware means, receiving and detecting the set of control parameters from the first handling unit and transmitting the same to a peripheral function unit and in the peripheral function unit configured by hardware means, performing the desired peripheral function based on the set of control parameters.

Preferably the first handling unit comprises a plurality of transaction buffers each adapted to store a transaction frame comprising the required set of control and address bits for performing a specific peripheral function. These transaction buffers are preferably adapted to send a transaction frame to the second handling unit as soon as the data are written into the transaction buffer. The transaction buffers in turn send a notification message to the programmable processing unit after data have been written into the transaction buffer and/or a transaction frame has been sent to the second handling unit.

According to a particular embodiment the transaction buffers are assigned priority levels determining a priority of the respective transaction frames sent to the second handling unit.

The transaction buffers may be adapted to receive, in direct relation to a request sent to a peripheral function unit, a response message from the respective peripheral function unit. This allows a synchronous operation of the peripheral function.

According to another embodiment the second handling unit comprises an event and transaction data handler adapted to receive the transaction frames from the transaction buffer, to extract and interpret the data and to access the respective peripheral function unit. The event and transaction data handler may further be adapted to additionally transmit response messages to the respective transaction buffer and to transmit non-requested data from a peripheral function unit to the first handling unit.

The second handling unit may further comprise a timer to initiate peripheral functions after elapse of a certain time.

The peripheral device may typically comprise actuator and/or sensor units as peripheral function units.

### Brief description of the drawings

The present invention and further features and advantages thereof will become more readily apparent from the following detailed description of particular embodiments with reference to the drawings, in which:
- Fig. 1: is a block diagram schematically illustrating a known control device for controlling on-chip peripheral functions;
- Fig. 2: is a block diagram schematically illustrating a known control device for controlling remote peripheral functions;
- Fig. 3: is a block diagram schematically illustrating a further known control device for controlling remote peripheral functions;
- Fig. 4: is a block diagram schematically illustrating a control device for controlling remote peripheral functions according to an embodiment of the present invention;
- Fig. 5: is a block diagram schematically illustrating the control device of Fig. 4 in the view of a software programmer;
- Fig. 6: is a block diagram schematically illustrating an embodiment of a first handling unit according to the present invention;
- Fig. 7: is a block diagram schematically illustrating an embodiment of a second handling unit according to the present invention;
- Fig. 8: is a flow chart illustrating an embodiment of a method of controlling a peripheral device according to the present invention.

### Detailed description of particular embodiments

The invention relates to a method to allow remote control of off-chip peripheral functions that normally are integrated to the control device (MCU). It provides a control mechanism that is independent to the underlying network topologies or physical layer implementation of the communication system used to access these remote peripherals. The present invention also provides a solution to eliminate distributed program code, as all necessary actions can be controlled by a single MCU.

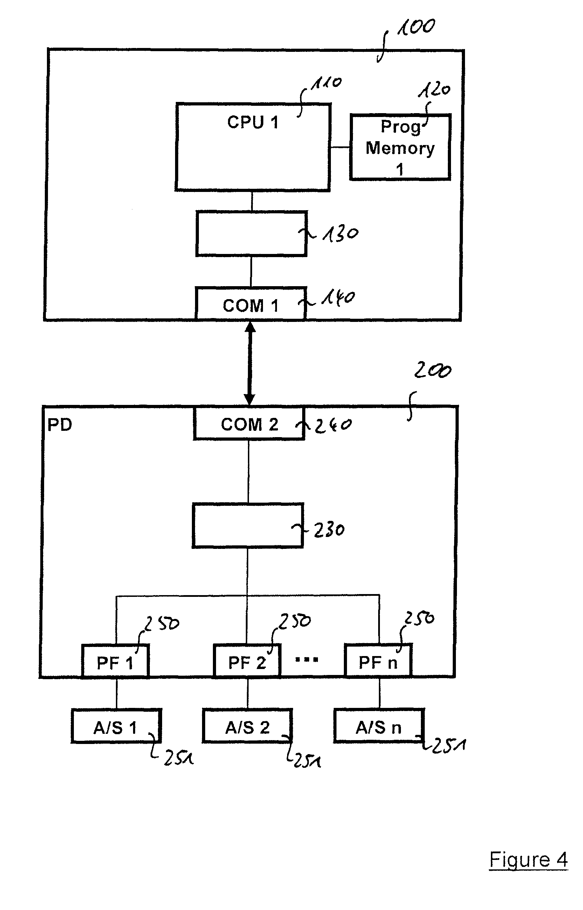

Fig. 4 is a block diagram schematically illustrating a control device 100 for controlling remote peripheral functions according to an embodiment of the present invention and shows a physical implementation on block level where the peripheral functions PF1, PF2,...PFn performed by peripheral function units 250, 251 are concentrated on a separate peripheral device 200. Within the scope of the invention the peripheral function units 250, 251 can also be distributed at several locations displaced from each other and linked by one or more communication media.

The control device 100 accesses the peripheral function units 250, 251 through a communication system established by communication unit 140 on control device side and communication unit 240 on peripheral device side allowing large displacements between control device 100 and peripheral device 200. The communication system itself is encapsulated by two handling units 130, 230, which are configurable state machines that do not need any program code from the user of the system. The first handling unit 130 on the control device side provides a register set to the control device which from a functional point of view resembles the register set of the respective peripheral function unit 250. When writing to these registers, the first handling unit 130 will initiate any necessary action implied by the access of the control device 100. The request for a function to a remote peripheral function PFn is transmitted, and once this transmission was issued successfully and again once an answer is obtained, the control device 100 is notified respectively.

The second handling unit 230 at the peripheral device side receives the request from the control device 100, interprets the requested action, and finally passes the parameters of the request to the respective peripheral function unit 250. Once a response becomes available the second handling unit 230 returns this response automatically.

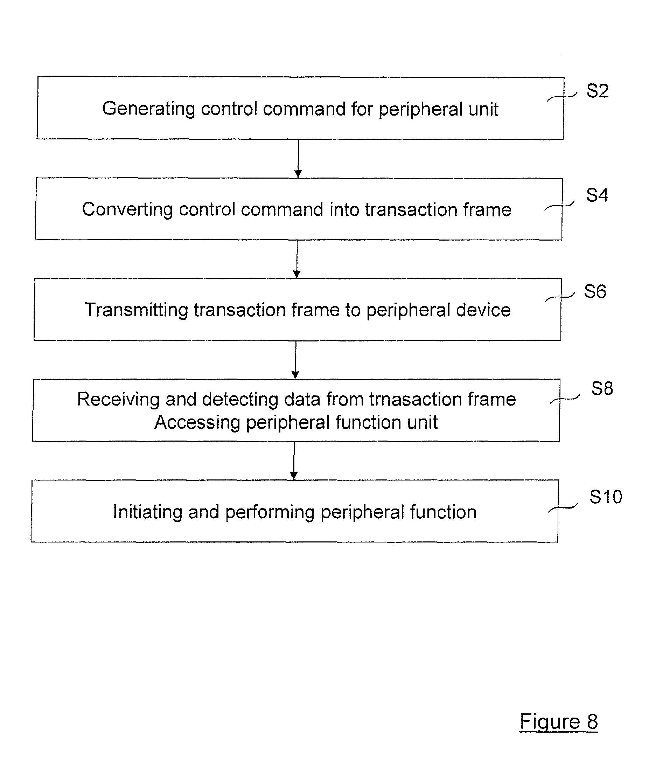

Fig. 8 is a flow chart schematically illustrating an embodiment of a method of controlling a peripheral device according to the present invention. In step S2, a control command for initiating a peripheral function at one of the peripheral function units 250 is generated at CPU 110 of the control device 100. In subsequent method step S4, the first handling unit 130 converts the control command into a transaction frame (explained in detail below), which in turn is transmitted via the communication link 140, 240 to the second handling unit 230 located on the (remote) peripheral device 200. The second handling unit 230 in method step S8 then detects the data from the transaction frame and accesses the corresponding peripheral function unit(s) 250, which then initiates and performs the desired peripheral function.

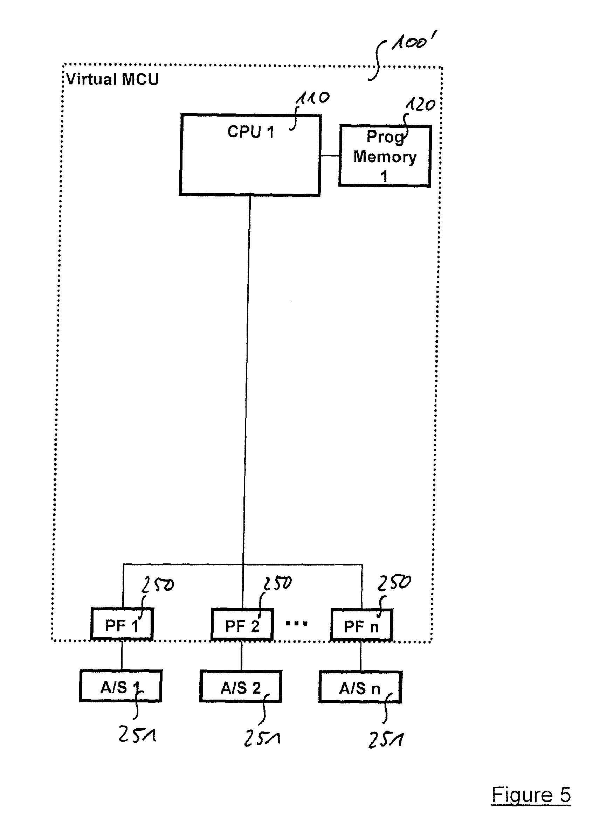

The abstraction of the system of Fig. 4, where the handling units 130, 230 virtually hide the under laying communication system is shown in Fig. 5. This abstraction also provides the view of a system designer or software developer. With the elimination of a remote processing unit its associated program memory the overall system can be considered again as only one control device. This virtual control device is indicated by the doted rectangle. It is obvious that the elimination of a remote processing unit and program memory reduces the software efforts to be spent. The existence of the first and second handling units 130, 230 virtually provides direct access of the CPU 110 of the control device 100 to the remote peripheral functions.

In order to provide this virtually direct access of the control device to the remote peripheral functions, two different types of handling units become necessary. On the control device side the first handling unit 130 is provided as the initiating instance and at the remote location the second handling unit 230 is provided.

### (1) First handling unit

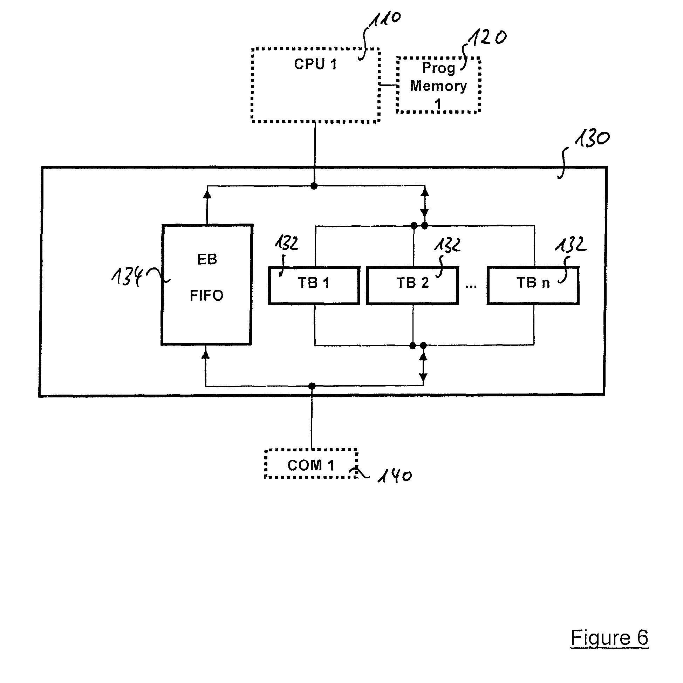

The first handling unit 130 provides means to send and receive data over dedicated hardware structures. The architectures of first handling unit 130 are shown Fig. 6. Towards the control device the first handling unit provides an interface which allows it to be operated as a memory mapped macro. Both, the programmable processing unit (CPU) 110 of the control device 100 and a direct memory access DMA, can therefore directly access the first handling unit 130.

The hardware structures visible to the user, which are used for implementing the method of remote control of peripheral functions are transaction buffers 132 and event buffers 134. Any read or write access to a peripheral function is handled over one or more transaction buffer 132. A transaction buffer can send or receive a transaction frame to or from the under laying communication layers. All transaction buffers 132 have an intrinsic priority level which decides on the sequence of accesses that shall be issued. The user has influence on the priority level by choosing an appropriate transaction buffer for a particular access to a peripheral function. The priority level of a particular transaction buffer 132 itself can not be changed by the user. Each buffer includes a set of control and address bits to initiate a certain peripheral function. Any configuration information needed for the particular access is embedded in a payload associated to any transaction frame which is sent by the transaction buffer 132. The transaction buffer will start transmitting the transaction frame to the first communication unit 140 automatically as soon as the payload is written into the transaction buffer 132 by the CPU 110. Any transaction buffer 132 provides notification services to the CPU 110 or to the DMA when the buffer became empty after transmission of the transaction frame or when new, valid data was received. These notifications can be used for interrupts to the CPU 110 or for triggering a DMA-operation at the control device 100. Using transaction buffers for requesting peripheral functions leads to a synchronous sort of operation, where a response is in direct relation to its request.

Any transmission request by the CPU 110 can be assigned to a particular physical layer. For any transaction buffer 132 a different communication media in the underlying layer of the first communication unit 140 can be selected. A programmable specific index which is assigned by the first handling unit 130 allows this distribution of requests independently of the remote peripheral function that shall be accessed.

Another sort of operation (asynchronous, event-driven) is realized with the event buffers 134. This type of buffer is only receiving data from a remote peripheral function unit 250. Other than in a transaction buffer 132, new data generated by the peripheral functions in the event buffer 134 are occurring not upon a dedicated request Rather, the peripheral functions are initialized by the control device 100, typically at system start. As a result of that initialization the peripheral functions will deliver new data virtually autonomously. Anytime a particular event takes place at the remote handler at the peripheral device 200, data is provided to the first handling unit 130. The first handling unit 130 stores the new data in chronological order in a FIFO allowing several responses to be received before the programmable processing unit 110 of the control device 100 has to act upon them. The notification to the CPU 110 can be configured such that an interrupt occurs.

This concept allows designs where accesses to remote peripheral functions are executed without using the first handling unit 130. This operation of bypassing provides enhanced testing possibilities when verifying the operation of the remote handler.

### (2) Second handling unit

The second handling unit 230 at the location of the peripheral device 200 has the ability to issue requests deriving from the control device 100, respond to these requests, and to perform autonomous operations on peripheral functions avoiding interactions of the control device 100.

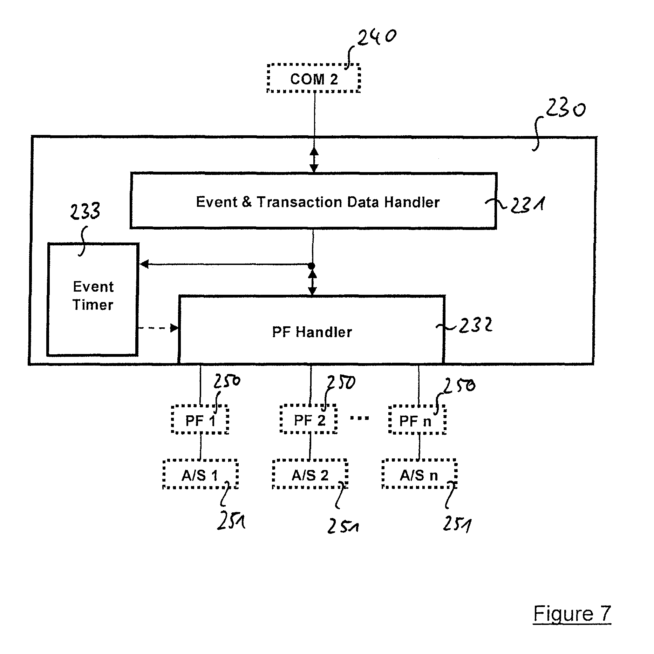

Fig. 7 shows the major functional blocks of the second handling unit 230. The second handling unit 230 communicates via the second communication unit 240 with the control device 100 from where it receives transaction frames and to which it sends data obtained from peripheral function units 250. Any transaction frame received from the second communication unit 240 will be passed through the event and transaction data handler 231 which extracts the payload data for the peripheral function handler 232. The peripheral function handler 232 finally interprets the data and accesses the suitable peripheral function unit 250. The peripheral function handler 232 thus acts as a master with full read and write access to all attached peripheral function units 250.

In opposite direction, the peripheral function handler 232 collects data from the peripheral function units 250 and submits these data to the event and transaction data handler 231 that is preparing response data to previously sent transaction frames or sending data to the event buffer FIFO in the first handling unit 130.

The second handling unit 230 supports three types of operations to obtain data from the peripheral function units 250:
1. Data retrieval initiated by transaction frames. Any submission of data from a peripheral function requires a dedicated request by the control device 100 by writing to a transaction buffer 132 at the first handling unit 130.
2. Data retrieval from events occurred at one of the peripheral function units 250 or its attached actuators or sensors. Prior to normal operation of the second handling unit 230, the control device 100 can initialize a peripheral function in such way that the peripheral function autonomously creates an event to the peripheral function handler 232, which in turn sends the obtained data via event and transaction data handler 231 to the event buffer FIFO at the first handling unit 130.
3. Data retrieval from events initiated by the elapse of time which is realized by the event timer 233 of the second handling unit 230. The control device 100 can configure the event timer 233 to generate events to the peripheral function handler 232 which in turn will issue predefined actions to the attached peripheral function units 250. The data obtained from such events will again be sent via the event and transaction data handler 231 to the event buffer FIFO at the first handling unit 130.

By means of these types of operation modes the inventive concept including first and second handling units 130, 230 provides isochronous operation of the peripherals accesses via the second handling unit 230 on the peripheral device 200 even though both systems, control device 100 and peripheral device 200, are asynchronous to each other. Further, including first and second handling units 130, 230 allow the integration of intelligent peripherals that automatically sent their data to the control device 100. And finally, the handling units 130, 230 support non-intelligent peripherals with a virtually autonomous behaviour which avoids obsolete traffic over the communication link between control device 100 and peripheral device 200 for reoccurring tasks that shall be issued at the peripheral function units 250.

The invention so eliminates the necessity for a second CPU on the peripheral device 200 that controls remote peripheral functions. This reduces the overall system cost not only for the amount of hardware not required anymore but in even larger scale for savings in software design and maintenance.

The first and second handling units 130, 230 described above do not require any code execution on an additional CPU besides the CPU 110 on the control device 100, from where the peripheral functions shall be controlled. Therefore the handling units 130, 230 eliminate distributed existence of program code. All program code operating remote peripherals can run on a single MCU (the control device 100), which helps to reduce costs for software development and software maintenance for the overall system. Especially additional S/W-modules needed for programming remote devices become obsolete.

The access method described in the patent is independent of the underlying data link layer and physical layer of the communication system which connects the remote peripherals to the control device 100. Users of the described access method can utilize any inherited communication system that is already in place. Therefore additional costs for a dedicated communication system for the remote access can be avoided.

In principle any sort of peripheral function can be controlled with the described method because the communication system used to access the remote peripherals is not visible from a programmer's view. Therefore additional functionality can be added to the overall system e.g displaced stepper motors for which the the control device passes values for duty cycles for a PWM to the peripheral while the PWM-output itself is generated by the respective remote peripheral. A similar implementation can be applied to light systems controlling LEDs or remote analogue to digital converters (ADC). This new system architecture enabled by the present invention reduces the length of wires to actuators or sensors connected to the remote peripheral (e.g. light bulbs/LEDs, stepper motors, ADCs, or other devices) compared to an architecture where all peripheral functions are embedded to a (central) MCU.

Especially the operation of remote ADC-units can be improved with the invention described here. When temperature, electrical values, brightness, or other analogue physical values shall be converted, but the location of measurement is far away from the control device, the invention enables the measurement without a localized CPU while avoiding long wires which are sensitive to disturbances. Thus the invention provides a cost-efficient architecture for measuring analogue values independent of their distance to the control device.

The present invention can e.g. be applied using an interfacing technology called APIX^{®}, Automotive Pixel Link, which provides a communication channel for image (pixel) data and control data to a remote graphic controller. These remote graphic controllers receive image data, which in turn finally is sent to a display. When applying the invention using the APIX^{®} technology the graphic controller can be dislocated from the controlling microprocessor unit (MCU) by several meters. This is regarded as a major benefit in automotive vehicle-based applications.

The concept of the invention can be applied as well to any other sort of peripheral, which is not embedded to the controlling MCU, or any other communication system. A major advantage provided by the method according to the invention is the reduction of costs for remote processing. This mechanism does not afford another processing unit (CPU) executing programmable code at the remote location of the peripherals.

## Claims

1. A system for controlling a peripheral function, comprising:
a control device (100) comprising:
a programmable processing unit (110) programmable to generate a control command to initiate and control a desired peripheral function remote to the control device (100), and
a first handling unit (130) configured by hardware means to convert a control command from the programmable processing unit (110) into a set
of control parameters,
a peripheral device (200) comprising:
a peripheral function unit (250) configured by hardware means to perform the desired peripheral function based on the set of control parameters, and
a second handling unit (230) connected to the first handling unit (130) via a communications link (140, 240) and configured by hardware means to receive and detect the set of control parameters from the first handling unit (130) and transmit the same to the peripheral function unit (250).

2. The system of claim 1, wherein the first handling unit (130) comprises a plurality of transaction buffers (132) each adapted to store a transaction frame comprising the required set of control and address bits for performing a specific peripheral function.

3. The system of claim 2, wherein the transaction buffers (132) are adapted to send a transaction frame to the second handling unit (230) as soon as the data are written into the transaction buffer (132).

4. The system of claim 3, wherein the transaction buffers (132) are adapted to send a notification message to the programmable processing unit (110) after a transaction frame has been sent to the second handling unit (230) and/or data has been received from the second handling unit (230).

5. The system of one of claims 1 to 4, wherein the transaction buffers (132) are assigned priority levels determining a priority of the respective transaction frames sent to the second handling unit (230).

6. The system of one of claims 1 to 5, wherein the transaction buffers (132) are adapted to receive, in direct relation to a request to a peripheral function unit (250), a response message from the respective peripheral function unit (250).

7. The system of claim 6, wherein the request-response operation allows a synchronous operation of the peripheral function with respect to a particular transaction buffer (132) and asynchronous operation with respect to the overall system using several transaction buffers (132)

8. The system of one of claims 1 to 7, wherein the first handling unit (130) comprises an event buffer (134) adapted to receive non-requested data from a peripheral function unit (250).

9. The system of one of claims 1 to 8, wherein the second handling unit (230) comprises an event and transaction data handler (231) adapted to receive the transaction frames from the transaction buffer (132), to extract and interpret the data and to access the respective peripheral function unit (250).

10. The system of claim 9, wherein the event and transaction data handler (231) is adapted to further tansmit response messages to the respective transaction buffer (132) and to transmit non-requested data from a peripheral function unit (250) to the event buffer (134) of the first handling unit (130).

11. The system of claim 9 or 10, wherein the second handling unit (230) further comprises a timer (233) to initiate peripheral functions after elapse of a certain time.

12. The system of one of claims 1 to 11, wherein the peripheral device (200) comprises as peripheral function units (250) actuator and/or sensor units (251).

13. The system of one of claims 1 to 12, wherein the control device (100) and one or more peripheral devices (200) are arranged in an automobile.

14. A method of controlling, through a control device, a peripheral function in a peripheral device (200) remote to the control device (100), the method comprising the steps of:
in the control device (100):
in a programmable processing unit (110), generating a control command to initiate and control a desired peripheral function remote to the contol unit (100),
in a first handling unit (130) configured by hardware means, converting the control command from the programmable processing unit (110) into a set of control parameters,
in the peripheral device (200):
in the peripheral function unit (250) configured by hardware means, performing the desired peripheral function based on the set of control parameters.
in a second handling unit (230) connected to the first handling unit (130) via a communications link (140, 240) and configured by hardware means, receiving and detecting the set of control parameters from the first handling unit (130) and transmitting the same to a peripheral function unit (250),

15. The method of claim 14, further comprising the steps of writing data into a transaction buffer (132) provided in the first handling unit (130) and in response thereto sending a transaction frame comprising the required set of control and address bits for performing a specific peripheral function to the second handling unit (230).

16. The method of claim 15, further comprising the steps of sending a notification message to the programmable processing unit (110) after a transaction frame has been sent to the second handling unit (230) and /or data has been received from the second handling unit (230).

17. The method of claim 15 or 16, wherein the transaction buffers (132) are assigned priority levels determining a priority of the respective transaction frames sent to the second handling unit (230).

18. The method of one of claims 14 to 17, wherein the transaction buffers (132) receive, in direct relation to a request to a peripheral function unit (250), a response message from the respective peripheral function unit (250).

19. The method of claim 18, wherein the request-response operation allows a synchronous operation of the peripheral function with respect to a particular transaction buffer (132) and asynchronous operation with respect to the overall system using several transaction buffer (132).

20. The method of one of claims 14 to 19, wherein an event buffer (134) provided in the first handling unit (130) receives non-requested data from a peripheral function unit (250).

21. The method of one of claims 14 to 20, wherein an event and transaction data handler (231) provided in the second handling unit (230) receives the transaction frames from the transaction buffer (132), extracts and interprets the data and accesses the respective peripheral function unit (250).

22. The method of claim 21, wherein the event and transaction data handler (231) further transmits response messages to the respective transaction buffer (132) and non-requested data from a peripheral function unit (250) to the event buffer (134) of the first handling unit (130).

23. The method of claim 21 or 22, wherein a timer (233) provided in the the second handling unit (230) initiates peripheral functions after elapse of a certain time.

24. The method of one of claims 14 to 23, wherein the peripheral functions include actuator and/or sensor functions.
